Europäisches Patentamt

European Patent Office

Office européen des brevets

(11) Veröffentlichungsnummer: **0 294 605**
**A2**

## EUROPÄISCHE PATENTANMELDUNG

(21) Anmeldenummer: **88107506.3**

(22) Anmeldetag: **10.05.88**

(51) Int. Cl.⁴: **H05B 41/29**

(30) Priorität: **10.06.87 DE 3719357**

(43) Veröffentlichungstag der Anmeldung:
**14.12.88 Patentblatt 88/50**

(84) Benannte Vertragsstaaten:
**DE FR GB IT**

(71) Anmelder:
**PATENT-TREUHAND-GESELLSCHAFT FÜR ELEKTRISCHE GLÜHLAMPEN mbH
Postfach 22 16 34
D-8000 München 22(DE)**

(72) Erfinder: **Arlt, Joachim
Guardinistrasse 141
D-8000 München(DE)**

(54) **Schaltungsanordnung zum Betrieb einer Entladungslampe an einer Niedervolt-Spannungsquelle.**

(57) Die Schaltungsanordnung zum hochfrequenten Betrieb einer Entladungslampe (L) an einer Niedervolt-Gleichspannungsquelle weist einen selbstanschwingenden Gegentaktwandler mit zwei Leistungstransistoren (T1, T2) und einem Ansteuertransformator (Tr2), einen Serienresonanzkreis parallel zum Ausgangskreis mit einer Resonanzinduktivität (L1) und einem Resonanzkondensator (C3) sowie einen Leistungstransformator (Tr1) für die Übertragung der hochfrequenten Schwingung des Gegentaktwandlers in den Serienresonanzkreis auf. Die Primärwicklung (n1) des Ansteuertransformators (Tr2) für den Gegentaktwandler ist in Reihe zur Sekundärwicklung (n3) des Leistungstransformators (Tr1) in den Serienresonanzkreis geschaltet. Dadurch fließt der Ausgangsstrom über die Primärwicklung (n1) des Ansteuertransformators (Tr2), wodurch eine ständige Anpassung der Transistorsteuerung an die Lastverhältnisse erfolgt.

EP 0 294 605 A2

## Schaltungsanordnung zum Betrieb einer Entladungslampe an einer Niedervolt-Spannungsquelle

Die Erfindung betrifft eine Schaltungsanordnung zum hochfrequenten Betrieb einer Entladungslampe an einer Niedervolt-Gleichspannungsquelle entsprechend dem Oberbegriff des Anspruchs 1.

Schaltungen dieser Art werden bisher insbesondere zum Betrieb von Glüh- und Niederdruckentladungslampen aus einer Notstrombatterie oder aus einer Gleichspannungsquelle, wie sie bei Bussen oder in der Eisenbahn vorliegt, verwendet. Neuerdings werden auch Untersuchungen angestellt, anstelle von Halogenglühlampen als Scheinwerferbeleuchtung im Auto Hochdruckentladungslampen zu verwenden. Diese Lampen stellen, damit sie sicher gezündet und betrieben werden können, sehr spezielle Anforderungen an eine Schaltungsanordnung.

Aus dem Telefunken-Taschenbuch für Röhren und Halbleiter (Ausgabe 1962, S. 413) ist eine Schaltungsanordnung zum Betreiben einer Last, wie sie oben aufgeführt ist, wiedergegeben. Die Schaltungsanordnung beinhaltet neben einer selbsterregten Gegentaktstufe einen Rückkoppelungszweig mit zwei Serienresonanzschaltungen aus jeweils einem Kondensator und einer Drossel. Durch diese Serienresonanzzweige wird zwar eine konstante Arbeitsfrequenz in der Gegentaktstufe erzeugt - größter Steuerstrom bei der Resonanzfrequenz - eine Anpassung des Steuerstroms an unterschiedliche Lastverhältnisse erfolgt jedoch nicht. Gerade Hochdruckentladungslampen stellen jedoch eine ganz unterschiedliche Last dar, je nachdem, ob sie nun kalt oder warm gezündet werden sollen oder ob sie bereits gezündet sind und die Anlaufphase durchlaufen.

Aufgabe der Erfindung ist es, eine Schaltungsanordnung zu schaffen, die durch ständige Anpassung an den jeweils benötigten Laststrom auch die schwierigsten Bedingungen zum Betrieb von Hochdruckentladungslampen an einer Niedervolt-Stromquelle erfüllt, wie die sichere und schnelle Zündung im heißen und kalten Zustand sowie in allen Abkühlphasen. Dabei sollte die Schaltungsanordnung aus wenigen Bauteilen bestehen und kostengünstig zu erstellen sein.

Diese Aufgabe wird durch das kennzeichnende Merkmal des 1. Anspruchs gelöst. Weitere vorteilhafte Ausgestaltungen der Schaltungsanordnung sind den Unteransprüchen zu entnehman.

Durch die Schaltung der Primärwicklung des Ansteuerformators in Reihe zur Sekundärwicklung des Leistungstransformators in den Ausgangskreis bestimmt der Laststrom auch die Steuerung der Gegentaktstufe. Er bestimmt mit seiner Größe auch die Größe der Ströme in den Sekundärwicklungen des Ansteuertransformators. Somit sind die Basisströme der elektrischen Schaltelemente immer den Lastverhältnissen im Ausgangskreis angepaßt. Die Schaltelemente werden immer in ihrem Sättigungsgebiet betrieben, was durch die Verwendung eines Ringkerns ohne Luftspalt für den Steuertransformator, der den Leistungsaufwand für die Magneti sierung gering hält, weiter begünstigt wird. Durch Fehlen des Luftspaltes werden Toleranzen bei der Vervielfältigung vermieden. Vorteilhaft bestehen die beiden elektronischen Schaltelemente aus schnellschaltenden Leistungstransistoren. Verschieden große Ausgangsleistungen lassen sich durch Parallelschalten von mehreren Leistungstransistoren verwirklichen. Die Anpassung der Transistorsteuerung an die Ausgangslast ist bei der erfindungsgemäßen Schaltungsanordnung so effektiv, daß sie sogar in kurzschlußähnlichem Resonanzbetrieb gewährleistet ist.

Die Basen der beiden Schaltelemente sind über die Sekundärwicklungen des Steuertransformators an einen gemeinsamen Mittenabgriff geführt, der wiederum über einen Widerstand mit dem Pluspol der Spannungsquelle verbunden ist. Um nun einerseits die Steuerkreiswiderstände möglichst niedrig halten zu können und andererseits am Mittenabgriff die für das Selbstanschwingen notwendige Basisspannung aufbauen zu können, ist zwischen den Mittenabgriff und den Minuspol neben einem Widerstand eine Diode in Sperrichtung geschaltet.

Zur Verhinderung von möglichen Spannungsspitzen, die durch Steuerinduktivitäten an den beiden Schaltelementen der Gegentaktstufe beim wechselseitigen Durchschalten entstehen können, sind die Schaltstrecken durch Freilaufdioden überbrückt.

Die Schaltungsanordnung ist anhand der nachfolgenden Figur näher veranschaulicht.

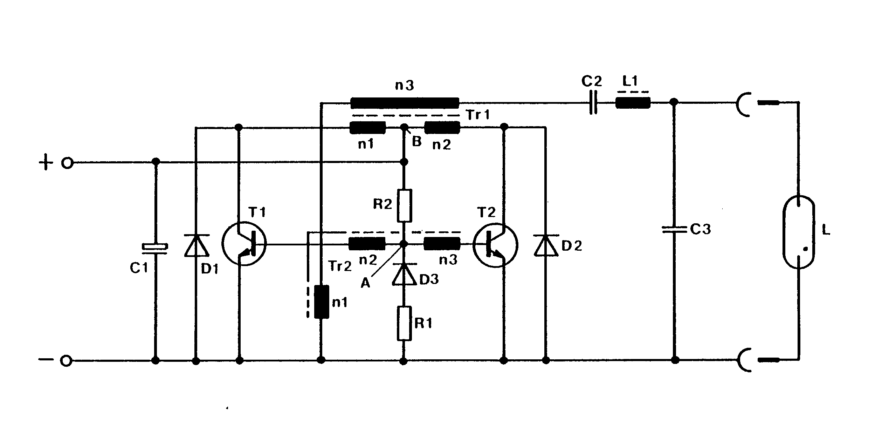

In der Figur ist eine erfindungsgemäße Schaltungs anordnung, wie sie zum Betrieb einer Hochdruckentladungslampe L an einer Gleichspannungsquelle Verwendung findet, dargestellt. Parallel zum Gleichspannnungseingang ist ein Glättungskondensator C1 geschaltet. Anschließend folgt die Gegentaktstufe mit den beiden npn-Transistoren T1, T2, deren Kollektoren über jeweils eine Primärwicklung n1, n2 des Leistungstransformators Tr1 an einem Mittenabgriff B miteinander verbunden sind. Die Emitter der beiden Transistoren T1, T2 sind an den Minuspol der Gleichspannungsquelle gelegt. Die Basen der Transistoren sind über jeweils eine Sekundärwicklung n2, n3 des Steuertransformators Tr2 an einen Mittenabgriff A geführt, der einerseits über eine Diode D3 und einen in Reihe liegenden Widerstand R1 mit dem Minuspol und andererseits über einen Widerstand R2 mit dem Pluspol der Gleichspannungsquelle verbunden ist. Auch der Mittenabgriff B zwischen den Primärwicklungen n1, n2 des Leistungstransformators Tr1 ist mit dem Pluspol der Spannungsquelle verbunden. Parallel zu den Kollektor-Emitter-Strecken der beiden Transistoren T1, T2 sind Dioden D1, D2 in Sperrichtung geschaltet.

Der Serienresonanzkreis besteht aus einer Drossel L1 und einer Resonanzkapazität C3. Außerdem ist in Reihe zu den obigen Elementen der Gleichstromtrennkondensator C2, die Sekundärwicklung n3 des Leistungstransformators Tr1 und die Primärwicklung n1 des Steuertransformators Tr2 geschaltet, wobei die drei Wicklungen n1, n2, n3 des Steuertransformators Tr2 auf einem gemeinsamen Ringkern sitzen. Parallel zur Resonanzkapazität C3 ist die Hochdruckentladungslampe geschaltet.

Bei Anschluß an die Gleichspannungsquelle fließt über den Widerstand R2 und die Wicklungen n2, n3 des Ansteuertransformators Tr2 der Schaltungsanordnung ein kleiner positiver Strom in die Basen der Schalttransistoren T1, T2 und bringt diese in den leitenden Zustand. Die Unsymmetrien der Transistoren T1, T2 verursachen kapazitive Verschiebungsströme im Resonanzkondensator C3 des Ausgangskreises. Diese Ströme fließen über die Primärwicklung n1 des Steuertransformators Tr2 und leiten über dessen Steuerwicklungen n2, n3 die wechselseitige Ansteuerung der beiden Transistoren T1, T2 ein.

Der Steuertransformator Tr2 ist vom Leistungstransformator Tr1 magnetisch getrennt, wodurch die frequenzbestimmenden Eigenschaften des Steuerteils in hohem Maß unbeeinflußt von den Dimensionen des Leistungstransformators Tr1 und den Stromverhältnissen im Ausgangskreis bleiben. Hierdurch wird die für den Betrieb von Hochdruckentladungslampen vorteilhafte Frequenzkonstanz erzielt.

In der nachfolgenden Tabelle sind die verwendeten Schaltungselemente für eine erfindungsgemäße Schaltungsanordnung zum Betrieb einer 35 W-Metallhalogenid-Hochdruckentladungslampe an einer 12 V-Gleichspannungsquelle zusammengestellt:

C1    : 1000 μF
T1, T2    : je 4 x BUV 26 in Parallelschaltung
Tr1    : Ferritkern E 36, n1 = 8 Wd, n2 = 8 Wd, n3 = 118 Wd (Wd = Windungen)
Tr2    : Ringkern, n1 = 13 Wd, n2 = 7 Wd, n3 = 7 Wd
R1    : 2,2 Ω
R2    : 2,2 kΩ
D1, D2    : RGP 30
D3    : BY 255

C2    : 33 nF
L1    : 12 mH
C3    : 1,4 nF

Im Resonanzfall entsteht am Kondensator C3 eine sinusförmige Wechselspannung von ca. 18 $kV_{ss}$ mit einer Frequenz von 45 kHz, die die Metallhalogenidhochdruckentladungslampe in einer Zeit kleiner 6 ms zum Zünden bringt. Im Resonanzkreis fließt hierbei, bedingt durch die Größe der Resonanzkapazität, ein effektiver Strom von ca. 2,5 A.

## Ansprüche

1. Schaltungsanordnung zum hochfrequenten Betrieb einer Entladungslampe (L) an einer Niedervolt-Gleichspannungsquelle, wobei die Schaltungsanordnung folgende Merkmale aufweist:
- einen selbstanschwingenden Gegentaktwandler mit zwei elektronischen Schaltelementen und einem Ansteuertransformator (Tr2)
- einen Serienresonanzkreis parallel zum Ausgangskreis mit einer Reihenschaltung aus einer Resonanzinduktivität (L1) und einem Resonanzkondensator (C3) und
- einem Leistungstransformator (Tr1) für die Übertragung der hochfrequenten Schwingung des Gegentaktwandlers in den Serienresonanzkreis, dadurch gekennzeichnet, daß die Primärwicklung (n1) des Ansteuertransformators (Tr2) für den Gegentaktwandler in Reihe zur Sekundärwicklung (n3) des Leistungstransformators (Tr1) in den Serienresonanzkreis geschaltet ist.

2. Schaltungsanordnung nach Anspruch 1, dadurch gekennzeichnet, daß der Ansteuertransformator (Tr2) einen Ringkern ohne Luftspalt besitzt.

3. Schaltungsanordnung nach Anspruch 1, dadurch ge kennzeichnet, daß der Serienresonanzkreis eine sehr hohe Güte besitzt.

4. Schaltungsanordnung nach Anspruch 1, dadurch gekennzeichnet, daß parallel zum Gleichspannungseingang vor den Gegentaktwandler ein Glättungskondensator (C1) geschaltet ist.

5. Schaltungsanordnung nach Anspruch 1, dadurch gekennzeichnet, daß die beiden elektronischen Schaltelemente schnellschaltende Leistungstransistoren (T1, T2) sind.

6. Schaltungsanordnung nach Anspruch 1, dadurch gekennzeichnet, daß die Steuerelektroden der beiden elektronischen Schaltelemente über die Sekundärwicklungen (n2, n3) des Ansteuertransformators (Tr2) an einen gemeinsamen Mittenabgriff (A) geführt sind.

7. Schaltungsanordnung nach Anspruch 1, dadurch gekennzeichnet, daß der Mittenabgriff (A) über eine Diode (D3) in Sperrichtung und einen Widerstand (R1) mit dem Minuspol der Spannungsquelle verbunden ist.

8. Schaltungsanordnung nach Anspruch 1, dadurch gekennzeichnet, daß der Mittenabgriff (A) über einen Widerstand (R2) mit dem Pluspol der Spannungsquelle verbunden ist.

9. Schaltungsanordnung nach Anspruch 1, dadurch gekennzeichnet, daß die Primärwicklung des Leistungstransformators (Tr1) aus zwei getrennten und in Reihe geschalteten Wicklungen (n1, n2) besteht, wobei ein Mittenabgriff (B) zwischen den beiden Wicklungen (n1, n2) vorgesehen ist, der mit dem Pluspol der Gleichspannungsquelle verbunden ist.

10. Schaltungsanordnung nach Anspruch 1, dadurch gekennzeichnet, daß die Schaltstrecken der elektronischen Schaltelemente durch Freilaufdioden (D1, D2) überbrückt sind.